# EUROPEAN PATENT SPECIFICATION

(11) **EP 2 730 766 B1**
(45) Date of publication and mention of the grant of the patent: **06.07.2016**
(21) Application number: 13005243.4
(22) Date of filing: 06.11.2013
(51) Int. Cl.: F02C 6/00, F02K 3/00, F02K 3/115, F02C 7/18

(54) **Heat exchange arrangement for a gas turbine**
Wärmetauscheranordnung für eine Gasturbine
Agencement d'échangeur de chaleur pour une turbine à gaz

(30) Priority: 09.11.2012 GB 201220174
(43) Date of publication of application: 14.05.2014
(73) Proprietor: Rolls-Royce plc, London SW1E 6AT (GB)
(72) Inventor: Chir, Adam Philip, Derby, DE72 3RN (GB)
(74) Representative: Rolls-Royce plc

(56) References cited:
- EP-A1- 1 550 925
- EP-A2- 2 213 864
- US-A1- 2009 138 128

## Description

### Field of the Invention

The present invention relates to a heat exchange arrangement and a method of controlling a heat exchange arrangement, and particularly to a heat exchange arrangement for a gas turbine engine.

### Background to the Invention

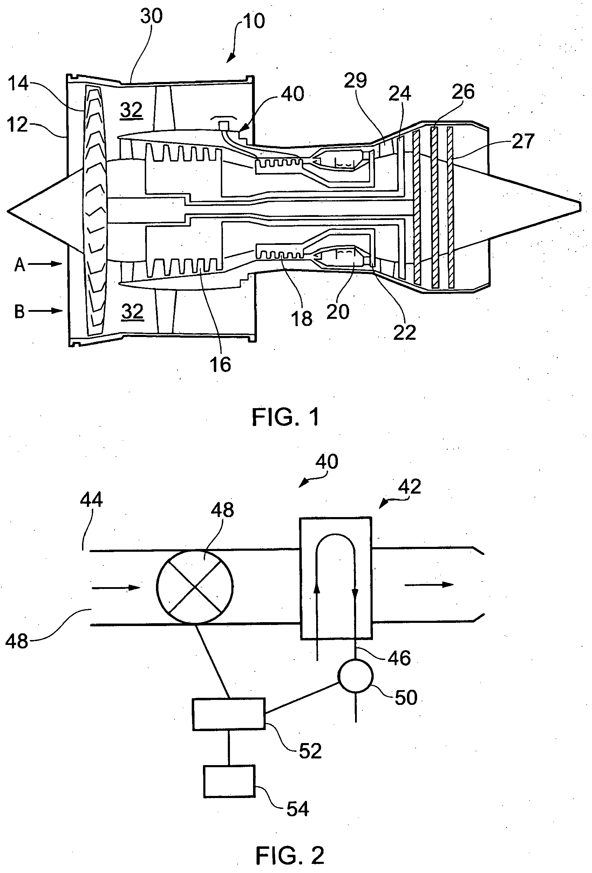

Figure 1 shows a gas turbine engine 10 comprising an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. Each turbine 22, 24, 26 comprises rotating turbine rotors 27 and stationary nozzle guide vanes (NGVs) 29. A nacelle 30 surrounds the gas turbine engine 10 and defines, in axial flow B, a bypass duct 32.

The air exiting the combustor 20 is generally at a very high temperature, which generally approaches or exceeds the melting point of the materials used turbine rotors 27 and NGVs 29. Consequently, relatively cool compressor air from the compressors 16, 18 is used to cool components downstream of the combustor such as the turbine rotors 27 and NGVs 29, thereby preventing damage to the components, and increasing their operating life. The compressor air is passed through an interior of the rotors 27 and / or NGVs 29, and out through holes to provide a cooling air film.

In gas turbine engine design, there is a continuing requirement for improved specific fuel consumption. Specific fuel consumption can be improved (i.e. reduced) by increasing the temperature of the combustion products exiting the combustor (known as the turbine entry temperature (TET). Alternatively or in addition, specific fuel consumption can be improved by increasing the pressure ratio provided by the compressors 14, 16, 18.

However, as TET increases, a larger mass flow of cooling air is required in order to maintain the components downstream of the combustor below their maximum temperature. Furthermore, as the compression ratio of the compressed air increases, so does the temperature of the compressor air. In some cases, the compressor air provided by the high pressure compressor 18 can reach temperatures in excess of 700° C. Consequently, the cooling capacity (i.e. the amount of heat that can be removed by the air from a hot fluid at a given temperature) of a given mass of air compressed by the compressors 16, 18 falls as the compression ratio increases, while the requirement for cooling increases as TET increases. Ultimately, a limit is reached whereby providing further cooling air is ineffective at restoring component operating life, and neither compression ratio nor TET can be increased. Furthermore, air used in cooling is not generally available to take part in the thermodynamic cycle of the engine. Consequently, excessive use of compressor air for cooling may result in an increase in specific fuel consumption at high TET or compression ratios.

One way to overcome this problem is to cool compressor air used for cooling by passing the compressor air through a heat exchanger such that the compressor air is in heat exchange relationship with a secondary heat exchange medium comprising a relatively cooler fluid. In a gas turbine engine for an aircraft, suitable secondary heat exchange mediums may comprises air from the bypass duct 32, or fuel used to power the gas turbine engine, such as liquid hydrocarbon based fuel.

One example of such an arrangement is described in EP 0469825 in which bypass air is used as the secondary heat exchange medium. Another example of such an arrangement is described in EP221386A. However, repeated sudden exposure of the heat exchanger to large thermal gradients, such as will occur when either cooling air or secondary heat exchange medium is passed to the heat exchanger, can induce high thermal stresses in the heat exchanger. This may cause sudden or eventual failure of the heat exchanger after a limited number of cycles. Consequently, there is a requirement to increase the longevity of the heat exchanger in such arrangements.

The present invention seeks to address some or all of the above problems.

### Summary of the Invention

According to a first aspect of the present invention, there is provided a heat exchange arrangement for a gas turbine engine, the heat exchange arrangement comprising:
a first conduit for an engine component cooling fluid and a second conduit for a second fluid,
a heat exchange portion in which fluids flowing through the first and second conduits are in a heat exchange relationship;
a valve configured to moderate the mass flow rate of one of the fluids through the heat exchange portion;
a temperature sensor configured to sense a temperature of one of the fluids after said fluid has passed through the heat exchange portion; and a controller, wherein the controller is configured to control the valve to maintain a rate of change of the temperature with respect to time of the fluid sensed by the temperature sensor to a valve below a predetermined rate of change of temperature.

According to a second aspect of the present invention there is provided a gas turbine engine comprising a heat exchange arrangement in accordance with the preceding paragraph.

According to a third aspect of the invention there is provided a method of controlling a heat exchange arrangement in accordance with either of the preceding two paragraphs, the method comprising monitoring the heat exchanger fluid exit temperature and moderating the valve to maintain the rate of change of the fluid exit temperature with respect to time to below a predetermined rate.

Accordingly, the invention provides a heat exchange arrangement in which large thermal gradients which may otherwise damage the heat exchange arrangement are prevented by controlling the fluid flow rate in accordance with a rate of change of temperature of one of the fluids after it has passed through the heat exchanger. The invention thereby eliminates or reduces thermally induced stresses in the heat exchanger, which in turn increases the longevity of the heat exchange arrangement. On the other hand, the arrangement is capable of reacting as quickly as possible to cooling requirements, thereby increasing cooled component life, while preventing damage to the heat exchange arrangement from occurring.

The controller may be configured to actuate the valve when the rate of change of the temperature with respect to time of the fluid sensed by the temperature sensor is above a predetermined value.

The second fluid may comprise any of air, fuel or engine oil, and the second fluid may comprise bypass air. Where the second fluid comprises bypass air, the second fluid conduit may be located within the bypass duct of the gas turbine engine.

In a preferred embodiment, the valve may be located within the second fluid conduit. Accordingly, the valve is configured to moderate the rate of flow of the second fluid. The controller may be configured to actuate the valve to reduce the flow rate of the second fluid through the second fluid conduit when the rate of change of the temperature with respect to time of the fluid sensed by the temperature sensor is above the predetermined value.

In a preferred embodiment, the temperature sensor may be located within an outlet of the first fluid conduit. Accordingly, the temperature sensor senses the temperature of the component cooling fluid after it is cooled by the second fluid.

Preferably, the valve may comprise a butterfly valve. Butterfly valves have been found to be particularly suitable for the invention, since they are suitable for accurately controlling the flow rate of a fluid.

The predetermined rate may be between 1 and 100 Kelvin per second. The predetermined rate may be found experimentally for a particular application.

The second fluid conduit may comprise an outlet downstream of the heat exchanger portion, the outlet being configured to accelerate fluid flowing out of the outlet. Such an arrangement is particularly suitable where the second fluid comprises bypass duct air. Accordingly, the velocity of the second fluid can be accelerated at the outlet to match the velocity of air in the bypass duct.

### Brief Description of the Drawings

Figure 1 is a diagrammatic cross sectional view of a gas turbine engine;
Figure 2 is a diagrammatic cross sectional view of a heat exchange arrangement; and
Figure 3 is a process flow diagram illustrating the operation of the heat exchange arrangement of Figure 2.

### Detailed Description

Figure 1 shows a gas turbine engine 10 comprising an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. Each turbine 22, 24, 26 comprises rotating turbine rotors 27 and stationary nozzle guide vanes (NGVs) 29. A nacelle 30 surrounds the gas turbine engine 10 and defines, in axial flow B, a bypass duct 32.

The gas turbine engine 10 includes a heat exchange arrangement 40, as shown diagrammatically in further detail in Figure 2. The arrangement comprises a first conduit 46 for an engine component cooling fluid. The engine component cooling fluid comprises high pressure compressor air supplied by the high pressure compressor 18, though air could alternatively be supplied from the intermediate pressure compressor 16. The arrangement also comprises a second conduit 44 for a second fluid. The second fluid comprises bypass air supplied from the bypass duct 32. The second conduit 44 is located within the bypass duct 32 such that when the engine 10 is in operation, bypass air can flow directly into an inlet 48 of the second conduit 44. The temperature of bypass air entering the inlet 48 varies from around -40° C to around 80° C during operation.

The heat exchange arrangement 40 comprises a heat exchange portion 42 through which the fluid in the first and second conduits 44, 46 pass. Fluids flowing through the first and second conduits 44, 46 in the heat exchange portion 42 are in a heat exchange relationship such the relatively hot high pressure compressor air flowing through the first conduit 46 is cooled by the relatively cool bypass air flowing through the second conduit 44. The heat exchange portion 42 comprises a matrix type heat exchanger formed of a material having high structural strength and suitable thermal conductivity such as steel, inconel, aluminium or titanium. Examples of suitable heat exchangers include plate-fin, plate-plate or tube type depending on pressure and temperature requirements. The described embodiment comprises a U-tube cross-counterflow arrangement, such an arrangement is preferred for high temperature and high pressure applications with moderate flow and heat exchange requirements. Other suitable heat exchanger arrangements comprise cross, counter, parallel or crosscounter flow arrangements, which may be suitable in situations having different flow, temperature and heat exchange requirements.

The arrangement 40 further comprises a valve 48 located within the second conduit 44, and configured to moderate the flow rate of the second fluid through the second conduit 44. In this embodiment, the valve 48 is located upstream of the heat exchange portion 42, though the valve 48 could alternatively be located downstream of the heat exchange portion 42, provided it is configured to moderate the flow rate of the second fluid through the second conduit 44. The valve 48 is actuable between and closed positions and is thereby configured to moderate the mass flow rate of the bypass air flowing through the second conduit 44 in use. The valve 48 could be of any suitable type which can be operated between an open position in which fluid flow is substantially unrestricted, and a closed position in which fluid flow is substantially stopped, and preferably to positions in between open and closed positions. In the described embodiment, the valve 48 comprises a butterfly valve.

The arrangement 40 includes a temperature sensor 50 which is configured to sense the temperature of the compressor air after it has passed through the heat exchange portion 42, i.e. in the first fluid flow, downstream of the heat exchange portion 42. The temperature sensor 50 comprises any sensor capable of producing an electrical signal in response to a temperature change, and in the described embodiment comprises a thermocouple.

The temperature sensor 50 is in signal communication with a valve controller 52. The valve controller 52 is in turn in signal communication with the valve 48, and is configured to provide a signal to actuate the valve between the open and closed positions, and preferably to intermediate positions, to increase or reduce the mass flow rate through the second conduit 44. The valve controller 52 is also in signal communication with an engine control unit (ECU) 54, which is configured to send a signal to the valve controller 52 to command a desired heat exchanger outlet compressor air temperature.

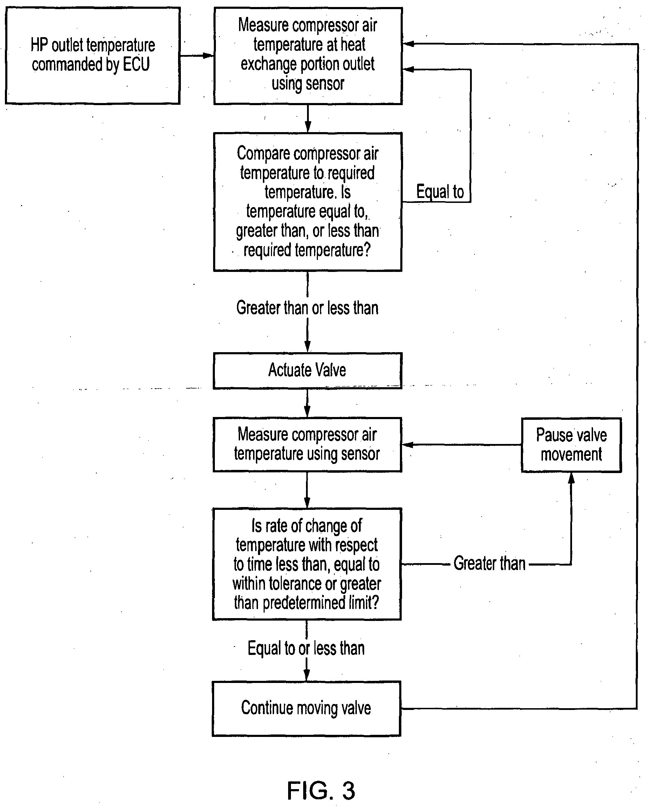

Figure 3 is a process flow diagram illustrating the operation of the heat exchange arrangement 40. The heat exchange arrangement 40 is operated in accordance with the process shown in Figure 3 as follows.

During operation of the engine 10, air is compressed by the compressors 16, 18, and a portion of the air from the high pressure compressor 18, or possibly the intermediate compressor 16, is directed through the first conduit 46 to the heat exchange portion 42. The fan 14 is also operated, such that air flows through the duct 32. A portion of this fan air is directed into the second fluid conduit 44 through the inlet 48.

During operation of the engine 10, the temperature of the air cooled components will vary somewhat, and varying cooling rates provided by the cooling air (i.e. flow rates or temperatures of the first fluid) may therefore be required. The amount and temperature of cooling air is regulated by the ECU 54. During operation, a signal is sent from the ECU 54 to the valve controller 52 commanding an engine component coolant fluid temperature in accordance with cooling requirements calculated by the ECU 54. The engine component fluid temperature may be chosen by the ECU 54 on the basis of engine operating conditions such as turbine entry temperature (TET) in order to maintain the cooled turbine components below a predetermined temperature, or to obtain a required life of the cooled component.

The temperature sensor 50 senses the temperature of the high pressure compressor air exiting the heat exchange portion 42 of the first conduit 46 and sends a signal representative of a first sensed temperature to the valve controller 52. The valve controller 52 compares the first sensed temperature with the required temperature. Where the required temperature and the first sensed temperature differ by more than a predetermined minimum amount, the valve controller 52 actuates the valve 48 to either open the valve in response to the engine component fluid temperature requirement. For example, where the first sensed temperature is below the required temperature, the valve controller 52 sends a signal to close the valve 48, either completely, or to an intermediate position in which the flow rate through the first passage 46 is reduced, whereas where the first sensed temperature is above the required temperature, the valve controller 52 sends a signal to open the valve 48.

The temperature sensor 50 continues to sense the temperature of the high pressure compressor air exiting the heat exchange portion 42 of the first conduit 46 while the valve is being actuated, and sends a signal representative of a second sensed temperature to the valve controller 52. After a pause for a predetermined period of time, a second sensed temperature is measured by the sensor 50, which sends a signal representative of the second sensed temperature to the valve controller 52.

The first and second sensed temperatures are compared, and the rate of change of the temperature of the high pressure compressor air exiting the heat exchange portion 42 is determined by dividing the temperature difference by the time interval between the first and second temperature measurements. Alternatively, the controller 52 could comprise a differentiator such as an RC circuit, which could determine the rate of change of the temperature by continuously monitoring the temperature signals from the sensor 50 and differentiating those signals with respect to time. Typically, the temperature signals would be monitored between 1 and 20 times per second, i.e. the time interval between the first and second measurements would be of the order of 0.05 and 1 seconds.

The rate of change with respect to time of the temperature of the high pressure compressor air exiting the heat exchange portion 42 of the first conduit 46 is then compared to a predetermined value corresponding to a maximum permissible rate of change. The predetermined value could be dependent on a number of factors, including the material of the heat exchanger, and could be determined experimentally. In one example, the predetermined value could be between 1 and 100 Kelvin per second.

If the rate of temperature change with respect to time is found to be greater than the predetermined limit, the valve controller 52 controls the valve 48 to reduce the rate of change of the temperature to below the predetermined amount. For example, the controller 52 may reduce the rate at which the valve 48 is actuated, or may temporarily halt movement of the valve 48, or may move the valve 48 to a closed or part closed position.

After a predetermined time period, the rate of change of temperature is sensed again, and compared to the predetermined rate, and the speed of movement or position of the valve 48 is adjusted accordingly. This process is repeated until the temperature of the compressor air sensed by the temperature sensor 50 matches the required temperature to within defined limits.

Accordingly, the invention provides a heat exchange arrangement having a number of advantages over prior arrangements. The control arrangement is relatively simple, comprising in one embodiment a thermocouple, an RC circuit, a transistor and a valve actuator. The arrangement alleviates or minimises thermal shock of the components during use, thereby increasing the life of the heat exchange arrangement. The control system can be added to an existing heat exchange arrangement, such that no modifications are required to the ECU.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For example, different materials may be used in the construction of the heat exchange arrangement. Different first and second fluids could be employed.

## Claims

1. A heat exchange arrangement (40) for a gas turbine engine (10), the heat exchange arrangement (40) comprising:
a first conduit (46) for an engine component cooling fluid and a second conduit (44) for a second fluid,
a heat exchange portion (42) in which fluids flowing through the first and second conduits (46, 44) are in a heat exchange relationship;
a valve (48) configured to moderate the mass flow rate of one of the fluids through the heat exchange portion (42);
a temperature sensor (50) configured to sense a temperature of one of the fluids after said fluid has passed through the heat exchange portion (42); and
a controller (52), **characterised in that** the controller (52) is configured to control the valve (48) to maintain a rate of change of the temperature with respect to time of the fluid sensed by the temperature sensor (50) to a value below a predetermined rate of change of temperature.

2. A heat exchange arrangement according to claim 1, wherein the controller (52) is configured to actuate the valve (48) when the rate of change of the temperature with respect to time of the fluid sensed by the temperature sensor (50) is above a predetermined value.

3. A heat exchange arrangement according to claim 1 or claim 2, wherein the second fluid comprises any of air, fuel or engine oil.

4. A heat exchange arrangement according to claim 3, wherein the second fluid comprises bypass air.

5. A heat exchange arrangement according to claim 4, wherein the second fluid conduit (44) is located within the bypass duct of the gas turbine engine (10).

6. A heat exchange arrangement according to any of the preceding claims, wherein the valve (48) is located within the second fluid conduit (44).

7. A heat exchange arrangement according to any of the preceding claims, wherein the temperature sensor (50) is located within an outlet of the first fluid conduit (46).

8. A heat exchange arrangement according to any of the preceding claims, wherein the valve (48) comprises a butterfly valve.

9. A heat exchange arrangement according to any of the preceding claims, wherein the predetermined rate is between 1 and 100 Kelvin per second.

10. A heat exchange arrangement according to any of the preceding claims, wherein the second fluid conduit (44) comprises an outlet downstream of the heat exchanger portion, the outlet being configured to accelerate fluid flowing out of the outlet.

11. A gas turbine engine (10) comprising a heat exchange arrangement (40) according to any of the preceding claims.

12. A method of controlling a heat exchange arrangement (40) according to any of the preceding claims, the method comprising monitoring the heat exchanger fluid exit temperature and moderating the valve (48) to maintain the rate of change of the fluid exit temperature with respect to time to below a predetermined rate.

## Patentansprüche

1. Wärmetauscheranordnung (40) für einen Gasturbinenmotor (10), wobei die Wärmetauscheranordnung (40) folgendes umfasst:
eine erste Leitung (46) für ein Motorkomponenten-Kühlfluid und eine zweite Leitung (44) für ein zweites Fluid;
einen Wärmetauscherabschnitt (42), in dem Fluids, die durch die ersten und zweiten Leitungen (46, 44) fließen, sich in einem Wärmetauschverhältnis befinden;
ein Ventil (48), das so gestaltet ist, dass es den Mengendurchfluss eines der Fluids durch den Wärmetauscherabschnitt (42) drosselt;
einen Temperaturfühler (50), der so gestaltet ist, dass er eine Temperatur eines der Fluids misst, nachdem das Fluid durch den Wärmetauscherabschnitt (42) verlaufen ist; und
eine Steuereinheit (52), **dadurch gekennzeichnet, dass** die Steuereinheit (52) so gestaltet ist, dass sie das Ventil (48) steuert, um eine Veränderungsrate der Temperatur im Verhältnis zur Zeit des durch den Temperaturfühler (50) gemessenen Fluids auf einem Wert unterhalb einer vorbestimmten Temperaturveränderungsrate zu halten.

2. Wärmetauscheranordnung nach Anspruch 1, wobei die Steuereinheit (52) so gestaltet ist, dass sie das Ventil (48) betätigt, wenn die Temperaturveränderungsrate im Verhältnis zu der durch den Temperaturfühler (50) gemessenen Zeit über einem vorbestimmten Wert liegt.

3. Wärmetauscheranordnung nach Anspruch 1 oder 2, wobei das zweite Fluid beliebig Luft, Kraftstoff oder Motoröl umfasst.

4. Wärmetauscheranordnung nach Anspruch 3, wobei das zweite Fluid Bypass-Luft umfasst.

5. Wärmetauscheranordnung nach Anspruch 4, wobei die zweite Fluidleitung (44) in der Bypass-Leitung des Gasturbinenmotors (10) angeordnet ist.

6. Wärmetauscheranordnung nach einem der vorangehenden Ansprüche, wobei sich das Ventil (48) in der zweiten Fluidleitung (44) befindet.

7. Wärmetauscheranordnung nach einem der vorangehenden Ansprüche, wobei sich der Temperaturfühler (50) in einem Auslass der ersten Fluidleitung (46) befindet.

8. Wärmetauscheranordnung nach einem der vorangehenden Ansprüche, wobei das Ventil (48) ein Drosselventil umfasst.

9. Wärmetauscheranordnung nach einem der vorangehenden Ansprüche, wobei die vorbestimmte Rate zwischen 1 und 100 Kelvin pro Sekunde liegt.

10. Wärmetauscheranordnung nach einem der vorangehenden Ansprüche, wobei die zweite Fluidleitung (44) stromabwärts des Wärmetauscherabschnitts einen Auslass umfasst, wobei der Auslass so gestaltet ist, dass er aus dem Auslass fließendes Fluid beschleunigt.

11. Gasturbinenmotor (10), umfassend eine Wärmetauscheranordnung (40) nach einem der vorangehenden Ansprüche.

12. Verfahren zur Steuerung einer Wärmetauscheranordnung (40) nach einem der vorangehenden Ansprüche, wobei das Verfahren das Überwachen der Austrittstemperatur des Wärmetauscherfluids umfasst, sowie das Drosseln des Ventils (48), um die Veränderungsrate der Fluidaustrittstemperatur in Bezug auf die Zeit unter einer vorbestimmten Rate zu halten.

## Revendications

1. Agencement d'échangeur de chaleur (40) pour une turbine à gaz (10), l'agencement d'échangeur de chaleur (40) comprenant :
un premier conduit (46) pour un liquide de refroidissement de composant de moteur et un second conduit (44) pour un second fluide,
une partie (42) d'échangeur de chaleur dans laquelle les fluides circulant dans les premier et second conduits (46, 44) sont dans une relation d'échange de chaleur ;
une vanne (48) conçue pour réguler le débit massique de l'un des fluides à travers la partie (42) d'échangeur de chaleur ;
un capteur de température (50) conçu pour détecter une température de l'un des fluides après que ledit fluide est passé à travers la partie (42) d'échangeur de chaleur ; et
un contrôleur (52), **caractérisé en ce que** le contrôleur (52) est conçu pour commander la vanne (48) pour maintenir un taux de variation de la température en fonction du temps du fluide détecté par le capteur de température (50) à une valeur inférieure à un taux de variation de température prédéfini.

2. Agencement d'échangeur de chaleur selon la revendication 1, le contrôleur (52) étant conçu pour actionner la vanne (48) lorsque le taux de variation de la température en fonction du temps du fluide détecté par le capteur de température (50) est supérieur à une valeur prédéfinie.

3. Agencement d'échangeur de chaleur selon la revendication 1 ou 2, le second fluide comprenant de l'air, du carburant ou de l'huile moteur.

4. Agencement d'échangeur de chaleur selon la revendication 3, le second fluide comprenant de l'air secondaire.

5. Agencement d'échangeur de chaleur selon la revendication 4, le second conduit de fluide (44) étant situé dans le conduit de dérivation de la turbine à gaz (10).

6. Agencement d'échangeur de chaleur selon l'une quelconque des revendications précédentes, la vanne (48) étant située dans le second conduit de fluide (44).

7. Agencement d'échangeur de chaleur selon l'une quelconque des revendications précédentes, le capteur de température (50) étant situé dans une sortie du premier conduit de fluide (46).

8. Agencement d'échangeur de chaleur selon l'une quelconque des revendications précédentes, la vanne (48) comprenant une vanne papillon.

9. Agencement d'échangeur de chaleur selon l'une quelconque des revendications précédentes, le taux prédéfini étant compris entre 1 et 100 Kelvin par seconde.

10. Agencement d'échangeur de chaleur selon l'une quelconque des revendications précédentes, le second conduit de fluide (44) comprenant une sortie en aval de la partie d'échangeur de chaleur, la sortie étant conçue pour accélérer le fluide s'écoulant de la sortie.

11. Turbine à gaz (10) comprenant un agencement d'échangeur de chaleur (40) selon l'une quelconque des revendications précédentes.

12. Procédé de commande d'un agencement d'échangeur de chaleur (40) selon l'une quelconque des revendications précédentes, le procédé comprenant les étapes consistant à surveiller la température de sortie du fluide échangeur de chaleur et à réguler la vanne (48) pour maintenir le taux de variation de la température de sortie de fluide en fonction du temps à une valeur inférieure à un taux prédéfini.
